(19) **Europäisches Patentamt**
**European Patent Office**
**Office européen des brevets**

(11) **EP 2 212 793 B1**

(12) **EUROPEAN PATENT SPECIFICATION**

(45) Date of publication and mention
of the grant of the patent:
**23.03.2011 Bulletin 2011/12**

(51) Int Cl.:
***G06F 11/28*** (2006.01)

(21) Application number: **08839584.3**

(86) International application number:
**PCT/EP2008/063454**

(22) Date of filing: **08.10.2008**

(87) International publication number:
**WO 2009/050084 (23.04.2009 Gazette 2009/17)**

(54) **LOOP CHECKING MECHANISM IN A DATA PROCESSING SYSTEM**

SCHLEIFENPRÜFMECHANISMUS IN EINEM DATENVERARBEITUNGSSYSTEM

MECANISME DE VERIFICATION DE BOUCLE DANS UN SYSTEME DE TRAITEMENT DE DONNEES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **18.10.2007 US 907963**

(43) Date of publication of application:
**04.08.2010 Bulletin 2010/31**

(73) Proprietor: **OMX Technology AB**
**105 78 Stockholm (SE)**

(72) Inventors:
• **JARL, Henrik**
**S-113 53 Stockholm (SE)**
• **ROSENLUND, Magnus**
**S-117 38 Stockholm (SE)**

• **GREEN, Thomas, E.**
**New York, NY 100022 (US)**
• **ERIKSSON, Johan**
**S-113 56 Stockholm (SE)**

(74) Representative: **Simonsson, Klas Johnny et al**
**OMX Technology AB**
**Office of General Counsel - Contracts & IP**
**105 78 Stockholm (SE)**

(56) References cited:
**US-A1- 2006 184 947     US-A1- 2007 220 346**

• **CHRISTOPHER OMEGA: "State transitions shouldn't clear the event queue!" ISSUE TRACKER FOR SECOND LIFE, vol. -, no. -, 22 June 2008 (2008-06-22), pages 1-1, XP007909180 Retrieved from the Internet: URL:http:// jira.secondlife.com/browse/SVC- 2560>**

**Description**

TECHNICAL FIELD OF THE INVENTION

The present invention relates to computer systems. The invention more particularly relates to a method, computing device, data processing system and computer program code for ensuring correct processing of data according to various system states.

DESCRIPTION OF RELATED ART

In complex computer systems, such as in trading systems, it is known that different data processing modules providing different functionalities process data and deliver such processed data to each other. Such modules may then process data and deliver to another module, as well as receive further data processed by other modules

In such systems it is also known to provide various states, because of changes either in the way the system is to be operated or because of a change in configuration of one or more of the modules. In a trading system one state can signal the closing of trading and another state may be a state signalling a change in configuration. As a new state is introduced it is important that the new state is applied to new data and not on old data that has its origin in a state preceding the new state. If this is not considered the operability of the system may be disturbed. The state updating should at the same time be fast and no data lost.

This is not so simple to implement in a data processing system, especially if the system is complex and has a number of interconnected modules that provide processed data to each other.

SUMMARY OF THE INVENTION

A first aspect of the present invention concerns a method for ensuring correct processing of data according to various system states in a first data processing module being able to communicate with a number of other data processing modules in a data processing system using a number of input and output channels, comprising the steps of:

receiving a state message indicating a change from an old state to a new state on at least one input channel,
blocking reception of data on all input channels having the new state,
sending at least one loop check message into each loop in a set of data processing loops, wherein the set includes all loops that the first data processing module is connected in via associated input and output channels and for which associated input channels the old state applies, and
removing the blocking when for each loop in the set either the loop check message is received in the first data processing module or the associated input channel has received a state message indicating the new state and all other input channels of the first data processing module have received a state message indicating the new state.

A second aspect of the present invention concerns a computing device for ensuring correct processing of data according to various system states and including a first data processing module for provision in a data processing system, the first data processing module comprising:

access to a number of input channels,
access to a number of output channels, and
a state control unit arranged to

block reception of data on all input channels on which a state message indicating a change from an old state to a new state has been received,
send at least one loop check message into each loop in a set of data processing loops, wherein the set includes all loops that the first data processing module is connected in via associated input and output channels and for which associated input channels the old state applies, and
remove the blocking when for each loop in the set either the loop check message is received in the first data processing module or the associated input channel has received a state message indicating the new state and all other input channels of the first data processing module have received a state message indicating the new state.

A third aspect of the present invention is directed towards a data processing system including a computing device according to the second aspect.

A fourth aspect of the present invention concerns a computer program product for ensuring correct processing of data according to various system states through providing a state control unit of a first data processing module in a data processing system, comprising computer program code on a data carrier arranged to, when the data carrier is being loaded into a computer,
block reception of data on all input channels on which a state message indicating a change from an old state to a new state has been received ,
send at least one loop check message into each loop in a set of data processing loops, wherein the set includes all loops that the first data processing module is connected in via associated input and output channels and for which associated input channels the old state applies, and
remove the blocking when for each loop in the set either the loop check message is received in the first data processing module or the associated input channel has received a state message indicating the new state and all other input channels of the first data processing module have received a state message indicating the new state.

The expression data processing path is intended to cover a path including a number of nodes where data is being processed in a node and sent to a following node in the path for being processed. Such a node is furthermore provided in the form of a data processing module.

The expression data processing loop is intended to cover a path of the above mentioned type, which forms a loop.

One advantage of the present invention is that state changes propagate in a deterministic and controlled way through data processing modules. According to the invention it is ensured that no data is lost or handled in a wrong state. State updating is furthermore fast. The invention also allows the system to be designed for non-linear data processing without risking race conditions to occur during operation.

It should be emphasized that the term "comprises/comprising" when used in this specification is taken to specify the presence of stated features, steps or components, but does not preclude the presence or addition of one or more other features, steps, components or groups thereof.

BRIEF DESCRIPTION OF THE DRAWINGS

The present invention will now be described in more detail in relation to the enclosed drawings, in which:

> fig. 1 schematically shows a computer system according to the present invention including a number of data processing modules, which system is with advantage a trading system,
> fig. 2 shows a flow chart of a number of method steps in a method for ensuring correct processing of data according to various system states,
> fig. 3 shows a flow chart of a number of method steps for determining data processing loops according to the present invention,
> fig. 4 schematically shows a first example of a number of interconnected nodes used for exemplifying a number of loop check messages that may be sent according to the principles of one variation of the present invention,
> fig. 5 schematically shows a second example of a number of interconnected nodes used for exemplifying the determination of data processing loops,
> fig. 6 schematically shows a tree exemplifying how nodes of the second example are treated in order to determine data processing loops starting from a first node,
> fig. 7 schematically shows a tree exemplifying how nodes of the second example are treated in order to determine data processing loops starting from a fourth node, and
> fig. 8 schematically shows the interconnected nodes of the second example and a message router sending a new state message to two of the nodes in order to give an example of how the method according to the present invention can be carried out.

DETAILED DESCRIPTION OF EMBODIMENTS

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. In other instances, detailed descriptions of well known devices, circuits, and methods are omitted so as not to obscure the description of the present invention with unnecessary detail.

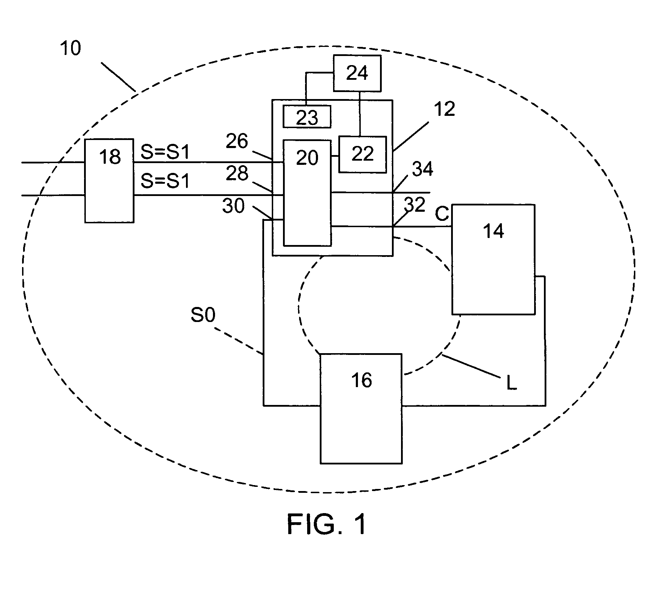

Fig. 1 schematically shows a simplified computer system 10 according to the present invention. The system 10 will in the following be described in relation to a trading system. It should however be realised that the present invention is in no way limited to a trading system, but can be used in any type of computer system.

In the system 10 there are a number of data processing modules 12, 14 and 16. Each of the modules is of a different type that provides a number of processing activities for a number of participants related to the system. Participants in a trading system can be such entities such as trading agents, stock exchanges, companies for which trading instruments are provided, authorities, information vendors etc. In fig. 1 three modules are shown, where a first module 12 may be a market module, a second module 14 may be an information handling module and a third module 16 may be a transactions module. These modules may in a logical sense for some of the computations being made be connected to each other in a loop L, which is indicated by a dashed circle. This means that the actual connection of the modules to each other may be provided in another way, for instance using a bus, but that data being processed pass these modules in such an order that a loop is formed.

It should be realised that these modules are mere examples of modules that can be provided according to the present invention and that there can be many more modules. When performing activities for the various actors, these modules process data and also forward such processed data for further processing.

The first module 12 has access to a number of input channels 26, 28 and 30. Here a first and a second input channel 26, 28 are connected to a message router 18. These channels are provided for receiving data from outside of the system 10, which data may be various trading instructions and other financial business instructions. Data originating outside of the system thus passes in this variation of the invention through the message router 18. There is furthermore a third channel 30 on which the first module 12 receives processed data from the third module 16. The first module 12 also has access to a number of output channels 32 and 34, where a first leads to the second processing module 14 and a second 34 may lead to another module or another entity where no processing is made or where no state dependent processing is made. It should here be realised that also the second and third modules 14 and 16 may in a similar way be provided with input and output channels. However, most of these have here been omitted in order to better explain the present invention. In fig. 1 there is however one output channel on the second module 14 connected to an input channel of the third module 16 as well as one output channel of the third module 16 connected to the third input channel 30 of the first module 12.

The first module 12 furthermore includes a data processing unit 20 connected to the input channels 26, 28 and 30 and arranged to process data for output on for instance the first and second output channels 32 and 34. The first module 12 furthermore includes a state control unit 22 being connected to the data processing unit 20. This state control unit 22 is also connected to a system configuration data store 24, which includes system configuration data for all of the system and thus system configuration data for the various modules. It should here be realised that also the second and third modules 14 and 16 normally would include such a state control unit that can receive data from the system configuration data store 24. There is also a loop determining unit 23 provided in the first data processing module 12, which unit 23 is also connected to the system configuration data store 24.

A module is provided in a computing device, like a computer, a server or some other computing device. Depending on the size of the system there can be one or more modules in the same computer as well as provided in different computers.

In fig. 1 there is shown a state message S which indicates a change from an old state to a new state. This is in fig. 1 shown as S = S1, where S1 is the new state. The message S is also shown as being provided from the message router 18 to the first module 12. There is also a loop check message C shown as being sent from the first module 12 to the second module 14. How these messages are handled will be described shortly. Finally the connection between the third module 16 and the first module 12 is shown as being in an old state S0 (indicated by a dashed line).

A system 10, like a trading system can have various states, where one state may be a state indicating that trading is ongoing and another may be a state indicating that trading is closing. Yet another state may indicate that reference data used by the different modules has been updated where such reference data may be definition of instruments traded, definitions of specific instruments, various limits for instruments etc. All these states have different implications for the processing of data. This means that processing of data in one state normally differs from processing of data in another state. As is indicated by the loop L in fig. 1, data that has been processed by the first processing module 12 may be sent to the second module 14 for processing, which in turn supplies further processed data to the third module 16. The third module finally processes the data from the second module 14 and supplies to the first module 12 for processing. These various types of processing are thus linked to each other. If the first processing unit 12 now receives a new state S1, the "old data" supplied by the third processing module 16 will unless something is done be processed according to the new state, instead of according to the old state S0 that should be applied,. The present invention is directed towards solving this problem.

There are a number of various types of data processing loops that can be provided in a system such as a trading system, where the data processing modules act as nodes in such loops.

One type of loop is a strong loop in the data flow (SLDF). In such a loop data leaves a first node on an output channel, passes through several nodes, where it may be processed and re-enters the first node, where it may be processed again and finally leaves the node on the same output channel.

A weak loop in the data flow (WLDF) is a loop where data leaves a first node on an output channel, passes through several nodes, where it may be processed and re-enters the first node. However, here the data does not have to leave the first node on the same output channel.

It will in the following be assumed that SLDF does not exist in the system of fig. 1.

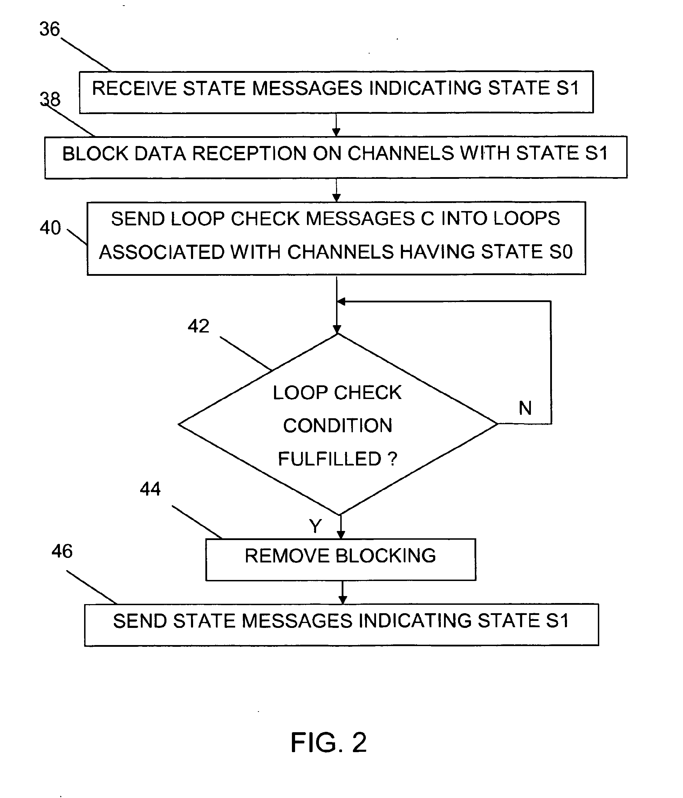

The general functioning of the system 10 according to the principles of the present invention will now be described also with reference being made to fig. 2, which shows a flow chart of a number of method steps in a method for ensuring correct processing of data according to various system states.

It is first assumed that the whole system is processing data according to an old state S0. Then processing is performed in the various modules 12, 14, 16 according to well known principles. However, at a certain point in time a new state, state S1, is introduced by the message router 18. This state is signalled through the use of a new state message S1 that is being sent to all data processing modules that receive data from outside of the system 10. As can be seen in the example in fig. 1, there is only one module that receives this message, namely the first data processing module 12. Such state messages are then in the example provided in fig. 1 forwarded from the first and second input channels 26 and 28 to the state control unit 22. It should here be realised that such a state message may be received on only one input channel or on more input channels. Therefore the method according to the present invention is started with the first data processing module 12 receiving one or more state messages S indicating a new state S1 via the first and second input channels 26 and 28, step 36. These state messages are then forwarded to the state control unit 22, which first blocks data on the input channels 26, 28 with the new state S1, step 38. It then orders the data processing unit 20 to empty itself of old data, i.e. to process and output any data that it has internally according to the old state S0. According to a first variation of the present invention the state control unit 22 then sends loop check messages C into a number of loops the first data processing unit is connected in. The first data processing module 12 is connected in such loops with associated input and output channels. How data processing loops that the first data processing module 12 is connected in can be determined will be described shortly. The state control unit 22 thus sends at least one loop check message C into a set of such data processing loops, step 40. This set does according to the present invention then only include the loops for which the associated input channel of the first data processing module 12 has the old state S0. Thus for the input channels associated with these loops the old state S0 still applies. As can be seen from the example in fig. 1, the state control unit 22 only sends messages C into the first output channel 32, which is part of such a loop L. This message C is in one variation of the present invention sent as C(S1, loop, 1), where S1 indicates the new state, loop indicates the loop in question and 1 is a loop counter indicating the number of links passed in a loop and is used for determining which module is to receive the message next. This message C here also includes a list of all modules or nodes belonging to the loop, starting and ending with the originating node, which originating node is here the first module. The message C is then processed by the next node, which is the second module 14, which in the same way then empties itself of old data and thereafter forwards the loop check message C, where the link counter is incremented so that the message now looks like C(S1, loop, 2). In this way all nodes in the loop process the loop check message C and eventually it will normally reach the first module 12 again via the third input channel 30. The state control unit 22 then awaits the fulfilment of a loop check condition, step 42. During this waiting the data processing unit 20 should have emptied itself of old data, i.e. processed and outputted data according to the old state S0 The loop check condition is that for each input channel associated with a loop either the loop check message C or a state message S indicating the new state S1 is received. The state control unit 22 may thereafter order the data processing unit 20 to await the presence of state messages indicating the new state on all the other input channels. When this has been done the state control unit 22 changes state for the first module 12 to the new state S1 and removes the blocking of the input channels, step 44. Thereafter the state control unit 22 sends state messages indicating the new state on all output channels, step 46. If, as is indicated above, the first module 12 receives state messages indicating the new state on all input channels during the checking, i.e. also on the third channel 30, the state control unit 22 may directly change state and disrupt the loop checking.

If a module that has started its checking receives a state message indicating the new state on an input channel, it should not start a new checking procedure, even though it may not be ready to change state. It just has to wait until enough checking messages have been received from the loops in order to ensure that no more old data can reach it. This same procedure is then also carried out by the other modules in the system.

A module that has the new state and receives a loop check message on an input channel from another node, which message originates in another node, should delete this message.

According to a second variation of the present invention, which is applied when WLDFs are possible, the state control unit waits with sending loop check messages until a state message indicating the new state is present on all input channels coming from modules with which the first module does not share any loop. After this it empties itself of old data and sends the loop check messages. In the example of fig. 1, there would therefore be waiting if the new state was not sent simultaneously on the first and the second input channels 26 and 28. In the same way the other modules in the loop would have to wait for all input channels not being part of a loop to receive the new state before forwarding the loop check message in the loop. For WLDF, it is furthermore necessary that all loops that the first module belongs to and via which it has not already received any state messages indicating the new state, have to be checked N times, where N is the minimum of L or M+1, where L is the number of input channels to the module for which loops are being considered and M is the number of output channels of this module belonging to the same loops. A new set of checks can furthermore not be performed until the previous set of checks have been completed. The first module does here not have to wait for the new state on the input channels, but can, as soon as enough loop check messages have been received, empty itself of old data and enter the new state.

As an alternative to the loop message including data of the nodes in the loop that are to be passed, it is possible that all nodes, i.e. data processing modules in a node, has knowledge of the loops the other nodes in this loop are a part of. Then the loop check message discussed above will not need to include any information of the nodes it has to pass. Instead a receiving node determines the next node in the loop based on this prestored information. This determination may furthermore only be made once, when the system is being set up and the results of it used later when state changes actually occur.

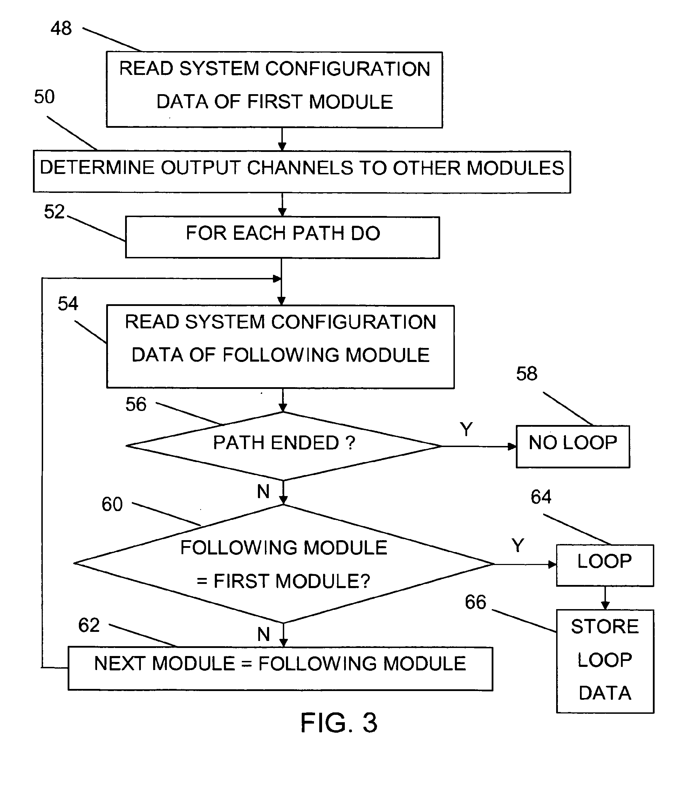

How the determination of which other data processing modules that are present as nodes in a loop can be determined will now be described in relation to fig. 3, which shows a flow chart of a number of steps for determining data processing loops according to the present invention and being performed in the loop determining unit 23 in the first processing module 12. This loop determining unit 23 may in some variations of the present invention be combined with the state control unit 22. It should here be realised that also the other data processing modules may be equipped with this node determination functionality. It should also be realised that one loop determining unit may be provided centrally for the whole system.

The loop determination may with advantage be provided when the system is being set up. Actual loop determination may start with the loop determining unit 23 reading system configuration data of the first module 12, step 48. Such system configuration data is with advantage provided in a system configuration store 24. Normally all modules would have access to this store 24 and it would then include system configuration data of all modules. The system configuration data here includes data about all the input channels to the first module and all the output channels from the first module and to which other entities, such as to which other data processing modules they are connected. From this data loop determining unit 23 first determines what connections exist to other data processing modules, step 50. Such data may be provided in a so-called adjacency matrix A including a number of elements indicating the connections between nodes. Both columns and rows of such a matrix would then indicate the nodes in the system and if there is a connection between two nodes. An element $a(i,j) = 0$ if such a connection does not exist and $a(i,j) = 1$ if it does. In order to find out the loops the loop determining unit 23 then finds out all the other modules the first module is connected to through investigating the connection matrix A, step 50. These connections then make up a number of paths that may be loops, but may also be other types of paths like paths with an end. For each such path that is created, step 52, the loop determining unit 23 then reads system configuration data of the following module in the path, step 54. If then this path has no more data processing modules, the path is ended, step 56, and the path determined as being no loop, step 58. If however there is a connection in the path to a following module after the next module, i.e. the path is not ended, step 56, the loop determining unit 23 then investigates this following module. If this following module is the first module, step 60, then the loop determining unit 23 determines that the path is in fact a loop, step 64, and stores loop data, step 66, where loop data typically includes data about the data processing modules and their channels that are involved in such a loop and in which module the loop originates. This data may with advantage be stored in the system configuration data store 24. It may also be stored locally in the first data processing module. In case the following module was not the first module, step 60, the next module is made into the following module, step 62, whereupon system configuration data of this module is checked, step 54. This is repeated until the path is either determined to be a loop or no loop. A state control unit that sends loop check messages would therefore locate the applicable loop data identifying the loops of the corresponding data processing module via the system configuration data store 24 in order to learn about which loops this module is connected in.

It should here be realised that it is furthermore possible that there may be branches, i.e. that one node may connect to two or more other nodes. A path may thus include a part that is branched from another path at a branching point

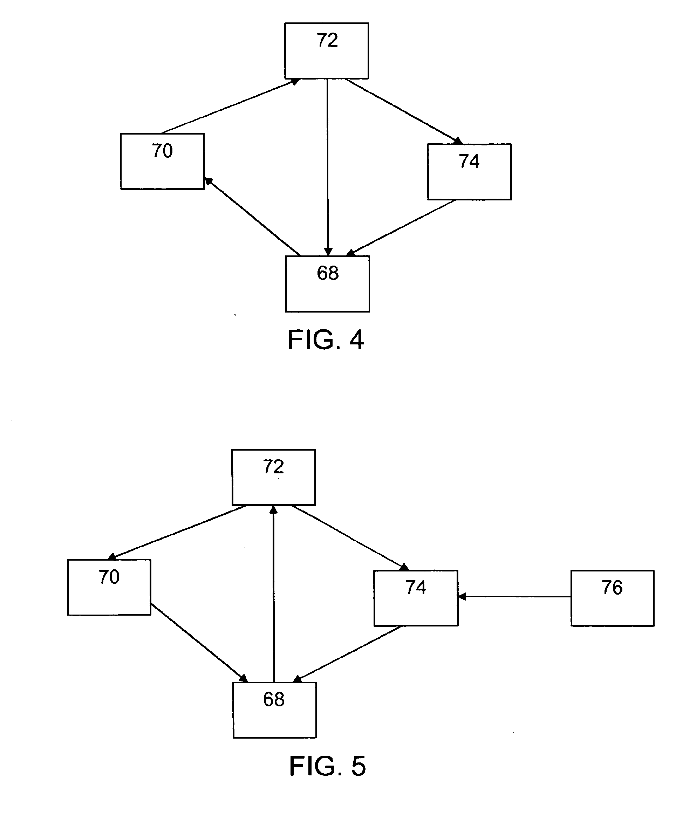

An example illustrating the need for several loop check messages per loop will now be described with reference being made to fig. 4, which schematically shows a first example of a number of interconnected nodes, which nodes may be provided as data processing modules according to the invention.

In fig. 4 there is a first node 68 having an output channel connect to an input channel of a second node 70, which in turn has an output channel connected to the input channel of a third node 72. The third node 72 has two output channels, a first connected to a first input channel of the first node 68 and a second connected to an input channel of a fourth node 74. The fourth node 74 does finally have an output channel connected to a second input channel of the first node 68. Here there are two paths originating in the first node 68. One loop being run through is thus made up of the first node 68, the second node 70, the third node 72 and the first node 68. A second loop being run through is being made up of the first node 68, the second node 70, the third node 72, the fourth node 74 and the first node 68. Here both these loops are checked. However old data may have left the first node 68 on the link to the second node 70 and come back through the link between the third 72 and first node 68. Since old data can not re-enter the fourth node 74 and leave through the link between this fourth node 74 and the first node 68 (under the assumption that no SLDF exist), it would be sufficient if one more check was made on the first loop or if a suspicion exists that old data exists in the third node 72 of the two loops.

In the general case if WLDF cannot be excluded the number of checks being made is as described earlier N times, where $N = \min(L, M+1)$ as described earlier. This is because the first time the loops are checked, old data can come from either of the loops and can leave the first node, the initiating node, through the same output channel it used the last time it passed the node. The second time around it can not leave the first node through the same output channel. Thus after M passes the old data can only leave the first node through one output channel and a further check is needed to ensure that it will not come back into the first node again. If the number of input channels L is less than M+1, then it will be enough to do the checking L times through a similar reasoning, because if old data arrives through one input channel when the first check is made, it cannot enter through the same channel the other times.

The reason that so many checks are necessary is that there is no way in knowing which paths through the network individual messages will take. However, in a specific case it may be possible to decrease the number of times a set of checks are set to be performed through identifying a "bottleneck", a minimal critical set comprising one or a few links. In this case it is necessary to check the critical set one more time than there are links K in the set. However with a network having few connections, the first approach is generally preferred.

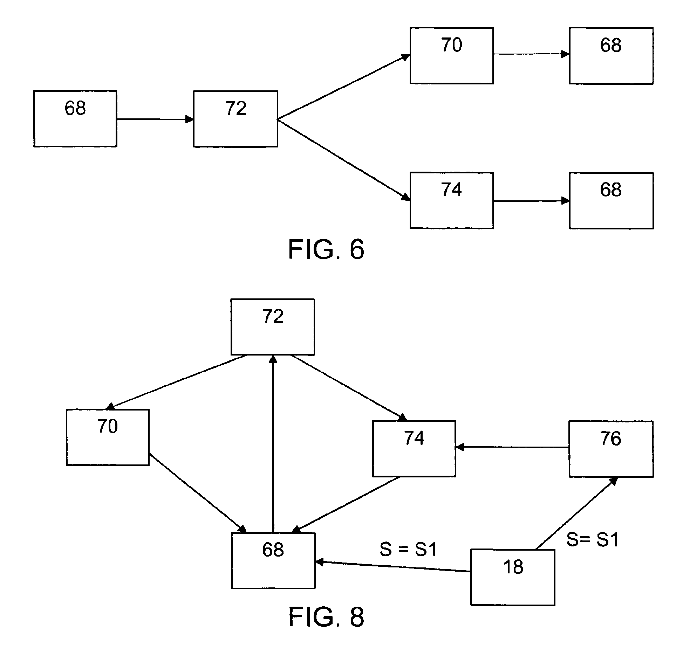

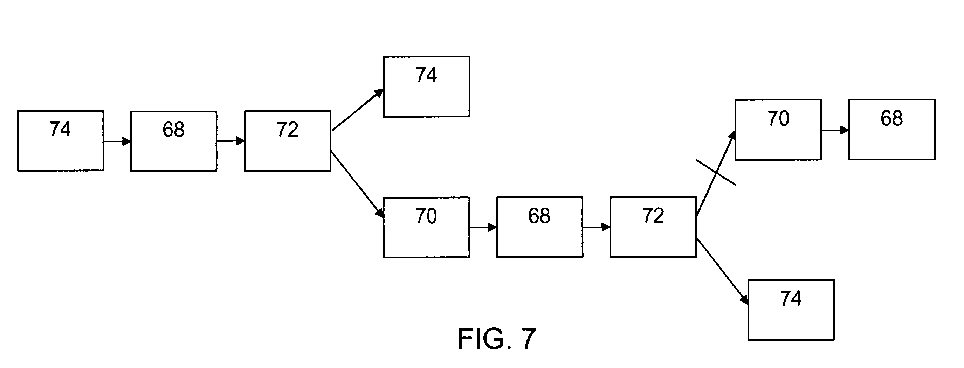

Now an example of how loops can be identified will be described with reference being made to fig. 5, 6 and 7, where fig 5. schematically shows a second example of a number of interconnected nodes used for exemplifying the determination of data processing loops, fig. 6 schematically shows a tree exemplifying how nodes of the second example are treated in order to determine data processing loops starting from a first node and fig. 7 schematically shows a tree exemplifying how nodes of the second example are treated in order to determine data processing loops starting from a fourth node.

The nodes interconnected in fig. 5 are similar to the nodes interconnected in fig. 4. The difference is that here there is a fifth node 76 having an output channel connected to an input channel of the fourth node 74 and that here the first node 68 has its output channel connect to an input channel of the third node 72, the third node 72 has a first output channel connected to an input channel of the second node 70 and that the second node 70 has an output channel connected to a first input channel of the first node 68. In all other respects, fig. 5 is identical to fig. 4.

The adjacency matrix A for the nodes in fig. 5 would then look like:

$$A = \begin{matrix} 0 & 0 & 1 & 0 & 0 \\ 1 & 0 & 0 & 0 & 0 \\ 0 & 1 & 0 & 1 & 0 \\ 1 & 0 & 0 & 0 & 0 \\ 0 & 0 & 0 & 1 & 0 \end{matrix}$$

Here the first row indicates the other nodes that the first node sends data to, the second row indicates the other nodes that the second node sends data to, the third row indicates the other nodes that the third node sends data to, the fourth row indicates the other nodes the fourth node sends data to and the fifth row indicates the other nodes that the fifth node sends data to. The first column indicates from which other nodes the first node receives data, the second column indicates from which other nodes the second node receives data, the second column indicates from which other nodes the second node receives data, the third column indicates from which other nodes the third node receives data, the fourth column indicates from which other nodes the fourth node receives data and the fifth column indicates from which other nodes the fifth node receives data. This means that for the nodes in fig. 5 there is only a setting for the third column in the first row, which indicates that the first node sends data to the third node. In the second row there is only a setting for the first column, which indicates that the second node sends data to the first node. In the third row there is only a setting for the second and fourth columns, which indicates that the third node sends data to the second and fourth node. In the fourth row there is only a setting for the first column, which indicates that the fourth node sends data to the first node. Finally, in the fifth row there is only a setting for the fourth column, which indicates that the fifth node sends data to the fourth node.

The loop finding method is here first applied for finding all nodes starting from the first node 68. From the nodes of fig. 5, the tree shown in fig. 6 is obtained. In fig 6 the first node 68 is shown on the right hand side, since it is the originating node from which loop finding is started. From this first node 68 there is one link to the third node 72. From the third node 72 there are two links, a first to the second node 70, which in turn leads to the first node 68 and a second to the fourth node 74, which in turn leads to the first node 68. To create this tree we start in the first node 68 and go along the only possible path to the third node 72. From this third node 72 there are two possible choices, either to go to the second node 70 or to the fourth node 74. From the second node 70 it is only possible to go to the first node 68, and we are back where we started and thus a first loop has been identified. The branch thus ends here. If we instead continue for the fourth node 74, it is again only possible to go to the first node 68 and the second loop is identified. Since there are no unfinished branches, the search is finished and a tree is obtained that represents all possible loops that start form the first node 68.

The same loop finding method is then applied on all loops starting from the fourth node 74, through which the tree in fig. 7 is obtained. In order to create this tree, we start in the fourth node 74 and from there go the only possible way to the first node 68. From the first node 68 it is only possible to end up in the third node 72. From the third node 72, there are two ways it is possible to go, a first branch leads to the fourth node 74 and a second branch leads to the second node 70. As the fourth node 74 is the starting point, the first branch thus identifies a third loop. From the other branch we can see that the second node 70 leads to the first node 68 and the first node 68 leads to the third node 72. At the third node there is the possibility of a third branch to the second node 70 and a fourth branch to the fourth node 74. In the third branch it is evident that from the second node 72 it is only possible to go to the first node 68. However, in order to reach this first node 68, the sequence first node 68, third node 72, second node 70 and first node 68 appears twice. This means that the same sub-loop has been passed twice. It is therefore according to the present invention possible to cut this branch after the last branching point in the tree, i.e. between the third and the second nodes 72 and 74. The fourth branch led to the fourth node 74, which is the starting point and thus a fourth loop is found. Since there are no further branches the search is over and the tree finished.

It is furthermore noted that in the larger loop, the fourth loop, there are links constituting a sub-loop identical with the third loop made of the fourth node 74, the first node 68, the third node 72 and the fourth node 74 and hence the smaller third loop does not have to be checked separately, since it is checked when the larger fourth loop made up the fourth node 74, the first node 68, the third node 72, the second node 70, the first node 68, the third node 72 and the fourth node 74 is checked.

The same loop checking principle is then applied on all the other nodes in the same way, but will not be described in more detail here.

What then happens when a new state is introduced will be described in relation to fig. 8, which schematically shows the interconnected nodes of the second example and a message router 18 connected to the first and the fifth nodes 68 and 76. The message router 18 here sends a message indicating the new state S1 to the first and the fifth nodes 68 and 76. Here it is also assumed that there are no WLDF in the system. The basic principle of the invention is then that the first node 68 first checks if it has new state messages on all its input channels. When it notices it has not and that its input channels that lack state messages indicating the new state are coming from nodes with which it shares loops, it empties itself of old data and sends a loop check message for each of these loops. In this case the first node 68 sends a loop check message C(S1, loop1,1) to the third node 72 and another loop check message C (S1,loop2,1) also to the third node 72 where the first of the these messages is sent into the first loop and the second into the second loop, which loops were identified above. The fifth node 76 checks if it has a new state message S1 on all its input channels and recognizes that it does. It then changes state to the new state S1 and sends a new state message to the fourth node 74. The third node 72, which received the loop check messages C(S1, loop1,1) and C(S1, loop2,1) from the first node 68, does not have any input channels coming from nodes with which it does not share any loops. It therefore does not have to wait for any new state messages. The third node 72 therefore forwards one of the loop check messages C(S1, loop1, 2) to the second node and the other loop check message C(S1, loop2, 2) to the fourth node, where the loop counter has been incremented in both loop check messages. The fourth node 74 on the other hand has a new state message present on one of the input channels and therefore checks if it has new state messages on all input channels. It has not, but since the remaining input channels come from a node with which the fourth node 74 shares a loop it therefore sends a loop check message C(S1, loop4, 1) to the first node 68. The second node 70 in turn forwards the C(S1, loop1, 3) message to the first node 68, with the loop counter incremented. When the fourth node 74 gets the loop check message C(S1, loop2, 2) from the third node 72, it knows it has new state messages on all input channels coming from nodes with which it does not share any loops. It then sends a loop check message C (S1, loop2, 3) to the first node 68. The first node 68 also receives the loop check message originating in the fourth node 74 and forwards it to the third node 72 as C(S1, loop4, 2). It also receives the loop check message C(S1, loop1, 3) from the second node 70 and notes that the first loop has been checked. It then receives the loop check message C(S1,loop2, 3) from the fourth node 74 and also notes that the second loop has been checked. Therefore the first node 68 has checked all its nodes, knows that it has new state messages on all its input channels coming from nodes with which it does not share any loop and since there are no WLDF, checking is now complete for this node. The first node 68 therefore assumes the new state S1 and sends out a new state message indicating the new state S1 to the third node 72. The third node 72 also forwards the C(S1, loop4, 3) loop check message to the second node 70 and when it receives the new state message it assumes the new state S1 and sends new state messages indicating the new state S1 to the second and the fourth nodes 70 and 74. The second node 70 forwards the loop check message (S1, loop4, 4) to the first node 68. When this message reaches the first node 68 it is deleted since the first node 68 is already in the new state S1. The second node 70 receives the new state message from the third node 72 and assumes this new state S1 as well and sends a new state message to the first node 68, which in turn deletes it since it has already assumed the new state S1. The fourth node 74 receives the new state message from the third node 72 and assumes the new state S1 and sends a new state message to the first node 68. The first node 68 then deletes this state message since it already has assumed the state in question.

Thereafter no more messages are sent and the network has been updated.

As an alternative it is necessary for a node to wait for all input channels that are not a part of a loop to receive the new state. This is the case if there are no WLDF. It can then immediately proceed and empty itself of old data and send a loop check message. In this case there is furthermore only one loop check message sent into each loop.

The present invention has a number of advantages. According to the present invention state changes propagate in a deterministic and controlled way through data processing modules. According to the invention it is ensured that no data is lost or handled in a wrong state. State updating is furthermore fast. The invention furthermore allows the system to be designed for non-linear data processing without taking the risk of getting race conditions during operation.

The data handling modules of the present invention including the data processing units state control units and loop determining units are, as has been described above, implemented using computer technology. They may therefore be implemented through one or more processors together with computer program code for performing their functions.

While the invention has been described in connection with what is presently considered to be most practical and preferred embodiments, it is to be understood that the invention is not to be limited to the disclosed embodiments, but on the contrary, is intended to cover various modifications and equivalent arrangements. The message router is for instance not limited to being provided in an input channel, but other ways of signalling state changes may be provided. Loop checking and loop determining units may furthermore be provided in the same unit. As mentioned before there may as an alternative be one loop determining unit provided for the whole system, which is responsible for the loop determination of the whole system. Therefore the present invention is only to be limited by the following claims.

**Claims**

1. Method for ensuring correct processing of data according to various system states (S0, S1) in a first data processing module (12; 68; 74) being able to communicate with a number of other data processing modules (14, 16; 70, 72, 74; 68, 72, 76) in a data processing system (10) using a number of input (26, 28, 30) and output channels (32, 34), comprising the steps of:

receiving (36) a state message (S) indicating a change from an old state (S0) to a new state (S1) on at least one input channel (26, 28), blocking (38) reception of data on all input channels (26, 28) having said new state, sending at least one loop check message (C) into each loop in a set of data processing loops (L), wherein said set includes all loops that said first data processing module (12; 68; 74) is connected in via associated input (30) and output channels (32) and for which associated input channels (30) the old state (S0) applies, and removing (44) the blocking when for each loop in the set either the loop check message (C) is received in the first data processing module (12) or the associated input channel has received a state message indicating the new state and all other input channels (26, 28) of the first data processing module (12; 68; 74) have received a state message (S) indicating said new state.

2. Method according to claim 1, further comprising the step of determining each data processing loop (L) said first data processing module(12; 68; 74) is connected in through

reading (48) system configuration data related to said first module indicating the entities that the input and/or output channels (26, 28, 30, 32, 34) of the first data processing module (12; 68; 74) are connected to, determining (50) a number of output channels leading to other data processing modules (14; 72; 68) for determining data processing paths originating from said first data processing module, performing (52), for an output channel (32) leading to a following data processing module (12) in a data processing path, the further steps of reading (54) system configuration data related to this following data processing module (14), determining (56) if there is a next data processing module (16) in the path after the following data processing module (14), making (60) the next data processing module the following data processing module, repeating the step of determining (56) if there is a next data processing module in the path until either the next data processing module is the first data processing module (60) or there is no next data processing module (56), determining (64) that a loop associated with the first data processing module (12) is present in case one of the modules encountered in the path is said first data processing module (60), and storing (66) data about this loop in relation to said first data processing module (12).

3. Method according to claim 2, wherein a data processing path may include branches and further comprising the step of removing a branch after a branching point (72) if a sequence of data processing modules (68, 72, 70, 68) including the data processing modules of said branch (70, 68) have been previously passed in the same order in the path.

4. Method according to any previous claim, wherein the loop check message indicates each data processing module it is to pass in the loop.

5. Method according to any of claims 1 - 3, further comprising the step of gathering and storing loop data concerning other data processing modules (14, 16) provided in the loops associated with the first data processing module (12), where said loop data comprises data regarding loops said other data processing modules are provided in, wherein each data processing module in a loop includes such loop data concerning the loops other data processing modules are provided in and further comprising the step of providing or forwarding loop check messages, by each data processing module, to a next data processing module in all loops based on such stored loop data.

6. Method according to any previous claim, wherein one loop check message (C) is sent into each loop.

7. Method according to any of claims 1 - 5, wherein N loop check messages are sent into each loop, where N is dependent on the number of inputs to the data processing module being connected in a loop or the number of outputs of the data processing module connected in said loops.

8. Method according to claim 7, wherein N is either equal to the number of inputs to the data processing module being connected in a loop or equal to the number of outputs of the data processing module connected in said loops plus one, whichever is lowest.

9. Method according to any of claims 1 - 5, wherein K+1 loop checks are performed, where K is the number of links in a critical set, where K is smaller than the number of input channels to the data processing module being connected in a loop and smaller than the number of output channels of the data processing module connected in said loops.

10. Method according to any previous claim, further comprising the step of sending a state message indicating a new state on all output channels.

11. A computing device for ensuring correct processing of data according to various system states (S0, S1) and including a first data processing module (12) for provision in a data processing system (10), said first data processing module (12) comprising:

  access to a number of input channels (26, 28, 30),
  access to a number of output channels (32, 34), and
  a state control unit (22) arranged to

    block reception of data on all input channels (26, 28) on which a state message (S) indicating a change from an old state (S0) to a new state (S1) has been received,
    send at least one loop check message (C) into each loop in a set of data processing loops (L), wherein said set includes all loops that said first data processing module (12) is connected in via associated input (30) and output channels (32) and for which associated input channels (30) the old state (S0) applies, and
    remove the blocking when for each loop in the set either the loop check message (C) is received in the first data processing module (12) or the associated input channel has received a state message indicating the new state and all other input channels (26, 28) of the first data processing module (12) have received a state message (S) indicating said new state.

12. A computing device according to claim 11, further comprising a loop determining unit (23) arranged to determine each data processing loop (L) said first module is connected in through
reading system configuration data related to said first module indicating the entities that the input and/or output channels (26, 28, 30, 32, 34) of the first data processing module (12) are connected to,
determining a number of output channels leading to other data processing modules (14) for determining data processing paths originating from said first data processing module, and
further performing, for an output channel (32) leading to a following data processing module (12) in a data processing path
reading system configuration data related to this following data processing module (14),
determining if there is a next data processing module (16) in the path after the following data processing module (14),
making the next data processing module the following data processing module, repeating the determining of if there is a next module in the path until either the next data processing module is the first data processing module (60) or there is no next data processing module,
determining that a loop associated with the first data processing module (12) is present in case one of the modules encountered in the path is said first data processing module, and
storing data about this loop in relation to said first data processing module (12).

13. A computing device according to claim 12, wherein a data processing path may include branches and the loop determining unit (23) is further arranged to remove a branch after a branching point (72) if a sequence of data processing modules (68, 72, 70, 68) including the data processing modules of said branch (70, 68) have been previously passed in the same order in the path.

14. A computing device according to any of claims 11 - 13, wherein the loop check message indicates each data processing module it is to pass in the loop.

15. A computing device according to any of claims 11 - 13, wherein the first data processing module (12) is further arranged to gather and store loop data concerning other data processing modules (14, 16) provided in the loops associated with the first data processing module (12), where said loop data comprises data regarding loops said other data processing modules are provided in, and to provide loop check messages to a next data processing module in all loops based on such stored loop data, wherein each data processing module in a loop includes such loop data concerning the loops other data processing modules are provided in for performing such loop check message sending.

**16.** A computing device according to any of claims 11-15, wherein the state control unit (22) is arranged to send one loop check message (C) into each loop.

**17.** A computing device according to any of claims 11 - 15, wherein the state control unit is arranged to send N loop check messages into each loop, where N is dependent on the number of inputs to the data processing module being connected in a loop or the number of outputs of the data processing module connected in said loops.

**18.** A computing device according to claim 17, wherein N is either equal to the number of inputs to the data processing module being connected in a loop or equal to the number of outputs of the data processing module connected in said loops plus one, whichever is lowest.

**19.** A computing device according to any of claims 11 - 15, wherein K + 1 loop checks are performed, where K is the number of links in a critical set, where K is smaller than the number of input channels to the data processing module being connected in a loop and smaller than the number of output channels of the data processing module connected in said loops.

**20.** A computing device according to any of claims 11 - 19, wherein the state control unit (22) is further arranged to send a state message indicating a new state on all output channels.

**21.** A data processing system (10) for ensuring correct processing of data according to various system states (S0 S1) and comprising a number of data processing modules (12, 14, 16), where at least one data processing module (12) is provided as a computing device according to any of claims 11 - 20.

**22.** A data processing system (10) according to claim 21, wherein it is a trading system.

**23.** Computer program product for ensuring correct processing of data according to various system states (S0, S1) through providing a state control unit (22) of a first data processing module (12) in a data processing system (10), comprising computer program code on a data carrier arranged to, when said data carrier is being loaded into a computer, block reception of data on all input channels (26, 28) on which a state message (S) indicating a change from an old state (S0) to a new state (S1) has been received , send at least one loop check message (C) into each loop in a set of data processing loops (L), wherein said set includes all loops that said first data processing module (12) is connected in via associated input (30) and output channels (32) and for which associated input channels (30) the old state (S0) applies, and remove the blocking when for each loop in the set either the loop check message (C) is received in the first data processing module (12) or the associated input channel has received a state message indicating the new state and all other input channels (26, 28) of the first data processing module (12) have received a state message (S) indicating said new state.

**Patentansprüche**

**1.** Verfahren zur Gewährleistung der richtigen Verarbeitung von Daten gemäß verschiedenen Systemzuständen (S0, S1) in einem ersten Datenverarbeitungsmodul (12; 68; 74), das imstande ist, mit einer Zahl von anderen Datenverarbeitungsmodulen (14, 16; 70, 72, 74; 68, 72, 76) in einem Datenverarbeitungssystem (10) unter Verwendung einer Zahl von Eingangs- (26, 28, 30) und Ausgangskanälen (32, 34) zu kommunizieren, umfassend die folgenden Schritte:

Empfangen (36) einer Zustandsnachricht (S), die eine Änderung von einem alten Zustand (S0) zu einem neuen Zustand (S1) anzeigt, in mindestens einem Eingangskanal (26, 28), Blockieren (38) des Empfangs von Daten in allen Eingangskanälen (26, 28), die den neuen Zustand haben, Senden mindestens einer Schleifenprüfnachricht (C) in jede Schleife in einem Satz von Datenverarbeitungsschleifen (L), wobei der Satz alle Schleifen enthält, in die das erste Datenverarbeitungsmodul (12; 68; 74) über assoziierte Eingangs- (30) und Ausgangskanäle (32) eingebunden ist und für deren assoziierte Eingangskanäle (30) der alte Zustand (S0) gilt, und Entfernen (44) der Blockierung, wenn für jede Schleife in dem Satz entweder die Schleifenprüfnachricht (C) in dem ersten Datenverarbeitungsmodul (12) empfangen wird oder der assoziierte Eingangskanal eine Zustandsnachricht empfangen hat, die den neuen Zustand anzeigt, und alle anderen Eingangskanäle (26, 28) des ersten Datenverarbeitungsmoduls (12; 68; 74) eine Zustandsnachricht (S) empfangen haben, die den neuen Zustand anzeigt.

2. Verfahren nach Anspruch 1, weiter den Schritt umfassend, jede Datenverarbeitungsschleife (L) zu bestimmen, in die das erste Datenverarbeitungsmodul (12; 68; 74) eingebunden ist, durch

Lesen (48) von Systemkonfigurationsdaten, die zu dem ersten Modul in Beziehung stehen und die die Elemente anzeigen, mit denen die Eingangs- und/ oder Ausgangskanäle (26, 28, 30, 32, 34) des ersten Datenverarbeitungsmoduls (12; 68; 74) verbunden sind,

Bestimmen (50) einer Zahl von Ausgangskanälen, die zu anderen Datenverarbeitungsmodulen (14; 72; 68) führen, zum Bestimmen von Datenverarbeitungswegen, die von dem ersten Datenverarbeitungsmodul ausgehen,

Ausführen (52), für einen Ausgangskanal (32), der zu einem folgenden Datenverarbeitungsmodul (12) in einem Datenverarbeitungsweg führt, die folgenden weiteren Schritte

Lesen (54) von Systemkonfigurationsdaten, die zu diesem folgenden Datenverarbeitungsmodul (14) in Beziehung stehen,

Bestimmen (56), ob ein nächstes Datenverarbeitungsmodul (16) in dem Weg hinter dem folgenden Datenverarbeitungsmodul (14) vorhanden ist,

Bewirken (60), dass das nächste Datenverarbeitungsmodul zum folgenden Datenverarbeitungsmodul wird,

Wiederholen des Schritts zum Bestimmen (56), ob ein nächstes Datenverarbeitungsmodul in dem Weg vorhanden ist, bis entweder das nächste Datenverarbeitungsmodul das erste Datenverarbeitungsmodul (60) ist oder kein nächstes Datenverarbeitungsmodul (56) vorhanden ist,

Bestimmen (64), dass eine Schleife, die mit dem ersten Datenverarbeitungsmodul (12) assoziiert ist, vorhanden ist, wenn eines der Module, auf die in dem Weg getroffen wurde, das erste Datenverarbeitungsmodul (60) ist, und

Speichern (66) von Daten über diese Schleife im Verhältnis zu dem ersten Datenverarbeitungsmodul (12).

3. Verfahren nach Anspruch 2, wobei ein Datenverarbeitungsweg Zweige enthalten kann, und weiter umfassend den Schritt zum Entfernen eines Zweigs nach einem Verzweigungspunkt (72), wenn eine Abfolge von Datenverarbeitungsmodulen (68, 72, 70, 68), die die Datenverarbeitungsmodule des Zweigs (70, 68) enthält, vorher in derselben Reihenfolge in dem Weg passiert wurde.

4. Verfahren nach einem der vorstehenden Ansprüche, wobei die Schleifenprüfnachricht jedes Datenverarbeitungsmodul anzeigt, das sie in der Schleife zu passieren hat.

5. Verfahren nach einem der Ansprüche 1-3, weiter umfassend den Schritt zum Erfassen und Speichern von Schleifendaten bezüglich anderer Datenverarbeitungsmodule (14, 16), die in den Schleifen bereitgestellt sind, die mit dem ersten Datenverarbeitungsmodul (12) assoziiert sind, wobei die Schleifendaten Daten hinsichtlich von Schleifen umfassen, in denen die anderen Datenverarbeitungsmodule bereitgestellt sind, wobei jedes Datenverarbeitungsmodul in einer Schleife derartige Schleifendaten bezüglich der Schleifen enthält, in denen andere Datenverarbeitungsmodule bereitgestellt sind, und weiter umfassend den Schritt zum Bereitstellen oder Weiterleiten von Schleifenprüfnachrichten durch jedes Datenverarbeitungsmodul an ein nächstes Datenverarbeitungsmodul in allen Schleifen basierend auf derartigen gespeicherten Schleifendaten.

6. Verfahren nach einem der vorstehenden Ansprüche, wobei eine Schleifenprüfnachricht (C) in jede Schleife gesandt wird.

7. Verfahren nach einem der Ansprüche 1-5, wobei N Schleifenprüfnachrichten in jede Schleife gesandt werden, wobei N von der Zahl der Eingänge zu dem Datenverarbeitungsmodul, das in eine Schleife eingebunden ist, oder der Zahl der Ausgänge des Datenverarbeitungsmoduls, das in die Schleifen eingebunden ist, abhängig ist.

8. Verfahren nach Anspruch 7, wobei N entweder gleich der Zahl von Eingängen zu dem Datenverarbeitungsmodul, das in eine Schleife eingebunden ist, oder gleich der Zahl von Ausgängen des Datenverarbeitungsmoduls, das in die Schleifen eingebunden ist, plus eins ist, dem jeweils kleinsten Wert.

9. Verfahren nach einem der Ansprüche 1-5, wobei K + 1 Schleifenprüfungen durchgeführt werden, wobei K die Zahl von Verknüpfungen in einem kritischen Satz ist, wobei K kleiner ist als die Zahl von Eingangskanälen zu dem Datenverarbeitungsmodul, das in einer Schleife eingebunden ist, und kleiner als die Zahl von Ausgangskanälen des Datenverarbeitungsmoduls, das in die Schleifen eingebunden ist.

10. Verfahren nach einem der vorstehenden Ansprüche, weiter umfassend den Schritt zum Senden einer Zustandsnachricht, die einen neuen Zustand anzeigt, in allen Ausgangskanälen.

11. Rechenvorrichtung zur Gewährleistung der richtigen Verarbeitung von Daten gemäß verschiedenen Systemzuständen (S0, S1) und enthaltend ein erstes Datenverarbeitungsmodul (12) zur Bereitstellung in einem Datenverarbeitungssystem (10), das erste Datenverarbeitungsmodul (12) umfassend:

Zugang zu einer Zahl von Eingangskanälen (26, 28, 30),

Zugang zu einer Zahl von Ausgangskanälen (32, 34), und

eine Zustandssteuereinheit (22), die angeordnet ist zum

Blockempfang von Daten in allen Eingangskanälen (26, 28), in denen eine Zustandsnachricht (S), die eine Änderung von einem alten Zustand (S0) zu einem neuen Zustand (S1) anzeigt, empfangen wurde,

Senden mindestens einer Schleifenprüfnachricht (C) in jede Schleife in einem Satz von Datenverarbeitungsschleifen (L), wobei der Satz alle Schleifen enthält, in die das erste Datenverarbeitungsmodul (12) über assoziierte Eingangs- (30) und Ausgangskanäle (32) eingebunden ist und für deren assoziierte Eingangskanäle (30) der alte Zustand (S0) gilt, und

Entfernen der Blockierung, wenn für jede Schleife in dem Satz entweder die Schleifenprüfnachricht (C) in dem ersten Datenverarbeitungsmodul (12) empfangen wird oder der assoziierte Eingangskanal eine Zustandsnachricht empfangen hat, die den neuen Zustand anzeigt, und alle anderen Eingangskanäle (26, 28) des ersten Datenverarbeitungsmoduls (12) eine Zustandsnachricht (S) empfangen haben, die den neuen Zustand anzeigt.

**12.** Rechenvorrichtung nach Anspruch 11, weiter umfassend eine Schleifenbestimmungseinheit (23), die angeordnet ist, um jede Datenverarbeitungsschleife (L) zu bestimmen, in die das erste Modul eingebunden ist, durch

Lesen von Systemkonfigurationsdaten, die zu dem ersten Modul in Beziehung stehen und die die Einheiten anzeigen, mit denen die Eingangs- und/oder Ausgangskanäle (26, 28, 30, 32, 34) des ersten Datenverarbeitungsmoduls (12) verbunden sind,

Bestimmen einer Zahl von Ausgangskanälen, die zu anderen Datenverarbeitungsmodulen (14) führen, zum Bestimmen von Datenverarbeitungswegen, die von dem ersten Datenverarbeitungsmodul ausgehen, und

weiterhin Ausführen, für einen Ausgangskanal (32), der zu einem folgenden Datenverarbeitungsmodul (12) in einem Datenverarbeitungsweg führt, von

Lesen von Systemkonfigurationsdaten, die zu diesem folgenden Datenverarbeitungsmodul (14) in Beziehung stehen,

Bestimmen, ob ein nächstes Datenverarbeitungsmodul (16) in dem Weg hinter dem folgenden Datenverarbeitungsmodul (14) vorhanden ist,

Bewirken, dass das nächste Datenverarbeitungsmodul zum folgenden Datenverarbeitungsmodul wird,

Wiederholen des Bestimmens, ob ein nächstes Datenverarbeitungsmodul in dem Weg vorhanden ist, bis entweder das nächste Datenverarbeitungsmodul das erste Datenverarbeitungsmodul (60) ist oder kein nächstes Datenverarbeitungsmodul vorhanden ist,

Bestimmen, dass eine Schleife, die mit dem ersten Datenverarbeitungsmodul (12) assoziiert ist, vorhanden ist, wenn eines der Module, auf die in dem Weg getroffen wurde, das erste Datenverarbeitungsmodul ist, und

Speichern von Daten über diese Schleife im Verhältnis zu dem ersten Datenverarbeitungsmodul (12).

**13.** Rechenvorrichtung nach Anspruch 12, wobei ein Datenverarbeitungsweg Zweige enthalten kann, und die Schleifenbestimmungseinheit (23) weiter angeordnet ist zum Entfernen eines Zweigs nach einem Verzweigungspunkt (72), wenn eine Abfolge von Datenverarbeitungsmodulen (68, 72, 70, 68), die die Datenverarbeitungsmodule des Zweigs (70, 68) enthält, vorher in derselben Reihenfolge in dem Weg passiert wurde.

**14.** Rechenvorrichtung nach einem der Ansprüche 11-13, wobei die Schleifenprüfnachricht jedes Datenverarbeitungsmodul anzeigt, das sie in der Schleife zu passieren hat.

**15.** Rechenvorrichtung nach einem der Ansprüche 11-13, wobei das erste Datenverarbeitungsmodul (12) weiter angeordnet ist zum Erfassen und Speichern von Schleifendaten bezüglich anderer Datenverarbeitungsmodule (14, 16), die in den Schleifen bereitgestellt sind, die mit dem ersten Datenverarbeitungsmodul (12) assoziiert sind, wobei die Schleifendaten Daten hinsichtlich von Schleifen umfassen, in denen die anderen Datenverarbeitungsmodule bereitgestellt sind, und zum Bereitstellen von Schleifenprüfnachrichten an ein nächstes Datenverarbeitungsmodul in allen Schleifen basierend auf derartigen gespeicherten Schleifendaten, wobei jedes Datenverarbeitungsmodul in einer Schleife derartige Schleifendaten bezüglich der Schleifen enthält, in denen andere Datenverarbeitungsmodule bereitgestellt sind, zum Ausführen des Sendens einer derartigen Schleifenprüfnachricht.

**16.** Rechenvorrichtung nach einem der Ansprüche 11-15, wobei die Zustandssteuereinheit (22) angeordnet ist, um eine Schleifenprüfnachricht (C) in jede Schleife zu senden.

**17.** Rechenvorrichtung nach einem der Ansprüche 11-15, wobei die Zustandssteuereinheit angeordnet ist, um N Schleifenprüfnachrichten in jede Schleife zu senden, wobei N von der Zahl der Eingänge zu dem Datenverarbeitungsmodul, das in eine Schleife eingebunden ist, oder der Zahl der Ausgänge des Datenverarbeitungsmoduls, das in die Schleifen eingebunden ist, abhängig ist.

18. Rechenvorrichtung nach Anspruch 17, wobei N entweder gleich der Zahl von Eingängen zu dem Datenverarbeitungsmodul, das in eine Schleife eingebunden ist, oder gleich der Zahl von Ausgängen des Datenverarbeitungsmoduls, das in die Schleifen eingebunden ist, plus eins ist, dem jeweils kleinsten Wert.

19. Rechenvorrichtung nach einem der Ansprüche 11-15, wobei K + 1 Schleifenprüfungen durchgeführt werden, wobei K die Zahl von Verknüpfungen in einem kritischen Satz ist, wobei K kleiner ist als die Zahl von Eingangskanälen zu dem Datenverarbeitungsmodul, das in einer Schleife eingebunden ist, und kleiner als die Zahl von Ausgangskanälen des Datenverarbeitungsmoduls, das in die Schleifen eingebunden ist.

20. Rechenvorrichtung nach einem der Ansprüche 11-19, wobei die Zustandssteuereinheit (22) weiter angeordnet ist zum Senden einer Zustandsnachricht, die einen neuen Zustand anzeigt, in allen Ausgangskanälen.

21. Datenverarbeitungssystem (10) zur Gewährleistung der richtigen Verarbeitung von Daten gemäß verschiedenen Systemzuständen (S0, S1) und enthaltend eine Zahl von Datenverarbeitungsmodulen (12, 14, 16), wobei mindestens ein Datenverarbeitungsmodul (12) als eine Rechenvorrichtung nach einem der Ansprüche 11-20 bereitgestellt ist.

22. Datenverarbeitungssystem (10) nach Anspruch 21, wobei es ein Handelssystem ist.

23. Computerprogrammprodukt zur Gewährleistung der richtigen Verarbeitung von Daten gemäß verschiedenen Systemzuständen (S0, S1) durch Bereitstellen einer Zustandssteuereinheit (22) eines ersten Datenverarbeitungsmoduls (12) in einem Datenverarbeitungssystem (10), umfassend Computerprogrammcode auf einem Datenträger, der, wenn der Datenträger in einen Computer geladen wird, angeordnet ist zum

Blockempfang von Daten in allen Eingangskanälen (26, 28), in denen eine Zustandsnachricht (S), die eine Änderung von einem alten Zustand (S0) zu einem neuen Zustand (S1) anzeigt, empfangen wurde,

Senden mindestens einer Schleifenprüfnachricht (C) in jede Schleife in einem Satz von Datenverarbeitungsschleifen (L), wobei der Satz alle Schleifen enthält, in die das erste Datenverarbeitungsmodul (12) über assoziierte Eingangs- (30) und Ausgangskanäle (32) eingebunden ist und für deren assoziierte Eingangskanäle (30) der alte Zustand (S0) gilt, und

Entfernen der Blockierung, wenn für jede Schleife in dem Satz entweder die Schleifenprüfnachricht (C) in dem ersten Datenverarbeitungsmodul (12) empfangen wird oder der assoziierte Eingangskanal eine Zustandsnachricht empfangen hat, die den neuen Zustand anzeigt, und alle anderen Eingangskanäle (26, 28) des ersten Datenverarbeitungsmoduls (12) eine Zustandsnachricht (S) empfangen haben, die den neuen Zustand anzeigt.

**Revendications**

1. Procédé pour garantir le traitement correct de données selon divers états de système (S0, S1) dans un premier module de traitement de données (12; 68; 74) étant capable de communiquer avec un certain nombre d'autres modules de traitement de données (14, 16; 70, 72, 74; 68, 72, 76) dans un système de traitement de données (10) par l'intermédiaire d'un certain nombre de canaux d'entrée (26, 28, 30) et de canaux de sortie (32, 34), comprenant les étapes consistant à:

recevoir (36) un message d'état (S) indiquant un changement d'un ancien état (S0) à un nouvel état (S1) sur au moins un canal d'entrée (26, 28),

bloquer (38) la réception de données sur tous les canaux d'entrée (26, 28) ayant ledit nouvel état,

envoyer au moins un message de vérification de boucle (C) dans chaque boucle dans un ensemble de boucles de traitement de données (L), dans lequel ledit ensemble comprend toutes les boucles dans lesquelles ledit premier module de traitement de données (12; 68; 74) est connecté via les canaux d'entrée (30) et de sortie (32) associés, et pour lesquels canaux d'entrée associés (30) l'ancien état (S0) s'applique, et retirer (44) le blocage lorsque, pour chaque boucle dans l'ensemble, soit le message de vérification de boucle (C) est reçu dans le premier module de traitement de données (12), soit le canal d'entrée associé a reçu un message d'état indiquant le nouvel état et tous les autres canaux d'entrée (26, 28) du premier module de traitement de données (12; 68; 74) ont reçu un message d'état (S) indiquant ledit nouvel état.

2. Procédé selon la revendication 1, comprenant en outre l'étape consistant à déterminer chaque boucle de traitement de données (L) dans laquelle est connecté ledit premier module de traitement de données (12; 68; 74):

en lisant (48) des données de configuration de système relatives audit premier module indiquant les entités auxquelles les canaux d'entrée et/ou de sortie (26, 28, 30, 32, 34) du premier module de traitement de données (12; 68; 74) sont connectés,

en déterminant (50) un certain nombre de canaux de sortie conduisant à d'autres modules de traitement de données (14; 72; 68) pour déterminer des chemins de traitement de données provenant dudit premier module de traitement de données,

en exécutant (52), pour un canal de sortie (32) conduisant à un module de traitement de données suivant (12) dans un chemin de traitement de données, les étapes supplémentaires consistant à:

lire (54) des données de configuration de système relatives à ce module de traitement de données suivant (14),

déterminer (56) s'il y a un prochain module de traitement de données (16) sur le chemin après le module de traitement de données suivant (14),

faire (60) du prochain module de traitement de données, le module de traitement de données suivant,

répéter l'étape de détermination (56) s'il y a un prochain module de traitement de données sur le chemin jusqu'à ce que soit le prochain module de traitement de données soit le premier module de traitement de données (60), soit qu'il n'y ait plus de prochain module de traitement de données (56),

déterminer (64) qu'une boucle associée au premier module de traitement de données (12) est présente dans le cas où un des modules rencontrés sur le chemin est ledit premier module de traitement de données (60), et

stocker (66) des données concernant cette boucle en relation avec ledit premier module de traitement de données (12).

3. Procédé selon la revendication 2, dans lequel un chemin de traitement de données peut comprendre des branches, et comprenant en outre l'étape consistant à retirer une branche après un point de branchement (72) si une séquence de modules de traitement de données (68, 72, 70, 68) comprenant les modules de traitement de données de ladite branche (70, 68) a été préalablement suivie dans le même ordre sur le chemin.

4. Procédé selon l'une quelconque des revendications précédentes, dans lequel le message de vérification de boucle indique chaque module de traitement de données qui fait partie de la boucle.

5. Procédé selon l'une quelconque des revendications 1 à 3, comprenant en outre l'étape consistant à collecter et à stocker des données de boucle concernant d'autres modules de traitement de données (14, 16) se trouvant dans les boucles associées au premier module de traitement de données (12), où lesdites données de boucle comprennent des données concernant des boucles dans lesquelles se trouvent lesdits autres modules de traitement de données, où chaque module de traitement de données dans une boucle comprend des données de boucle concernant les boucles dans lesquelles se trouvent d'autres modules de traitement de données, et comprenant en outre l'étape consistant à délivrer ou faire suivre des messages de vérification de boucle, par chaque module de traitement de données, à un prochain module de traitement de données dans toutes les boucles, sur la base de telles données de boucle stockées.

6. Procédé selon l'une quelconque des revendications précédentes, dans lequel un message de vérification de boucle (C) est envoyé dans chaque boucle.

7. Procédé selon l'une quelconque des revendications 1 à 5, dans lequel N messages de vérification de boucle sont envoyés dans chaque boucle, où N dépend du nombre d'entrées vers le module de traitement de données étant connecté dans une boucle ou du nombre de sorties du module de traitement de données connecté dans lesdites boucles.

8. Procédé selon la revendication 7, dans lequel N est soit égal au nombre d'entrées dans le module de traitement de données étant connecté dans une boucle, soit égal au nombre de sorties du module de traitement de données connecté dans lesdites boucles plus un, selon lequel est le plus petit nombre.

9. Procédé selon l'une quelconque des revendications 1 à 5, dans lequel K+1 vérifications de boucle sont effectuées, où K est le nombre de liaisons dans un ensemble critique, où K est plus petit que le nombre de canaux d'entrée vers le module de traitement de données étant connecté dans une boucle et plus petit que le nombre de canaux de sortie du module de traitement de données connecté dans lesdites boucles.

10. Procédé selon l'une quelconque des revendications précédentes, comprenant en outre l'étape consistant à envoyer un message d'état indiquant un nouvel état sur tous les canaux de sortie.

**11.** Dispositif informatique pour garantir le traitement correct de données selon divers états de système (S0, S1) et comprenant un premier module de traitement de données (12) à intégrer dans un système de traitement de données (10), ledit premier module de traitement de données (12) comprenant:

un accès à un certain nombre de canaux d'entrée (26, 28, 30),

un accès à un certain nombre de canaux de sortie (32, 34), et

une unité de contrôle d'état (22) arrangée pour bloquer la réception des données sur tous les canaux d'entrée (26, 28) sur lesquels un message d'état (S), indiquant un changement d'un ancien état (S0) à un nouvel état (S1), a été reçu, envoyer au moins un message de vérification de boucle (C) dans chaque boucle dans un ensemble de boucles de traitement de données (L), où ledit ensemble comprend toutes les boucles dans lesquelles ledit premier module de traitement de données (12) est connecté via des canaux d'entrée (30) et de sortie (32) associés, et pour lesquels canaux d'entrée associés (30) l'ancien état (S0) s'applique, et

retirer le blocage lorsque, pour chaque boucle dans l'ensemble, soit le message de vérification de boucle (C) est reçu dans le premier module de traitement de données (12), soit le canal d'entrée associé a reçu un message d'état indiquant le nouvel état et tous les autres canaux d'entrée (26, 28) du premier module de traitement de données (12) ont reçu un message d'état (S) indiquant ledit nouvel état.

**12.** Dispositif informatique selon la revendication 11, comprenant en outre une unité de détermination de boucle (23) arrangée pour déterminer chaque boucle de traitement de données (L) dans laquelle est connecté ledit premier module de traitement de données:

en lisant des données de configuration de système relatives audit premier module indiquant les entités auxquelles les canaux d'entrée et/ou de sortie (26, 28, 30, 32, 34) du premier module de traitement de données (12) sont connectés, en déterminant un certain nombre de canaux de sortie conduisant à d'autres modules de traitement de données (14) pour déterminer des chemins de traitement de données provenant dudit premier module de traitement de données, et en exécutant en outre, pour un canal de sortie (32) conduisant à un module de traitement de données suivant (12) dans un chemin de traitement de données, les étapes consistant à:

lire des données de configuration de système relatives à ce module de traitement de données suivant (14),

déterminer s'il y a un prochain module de traitement de données (16) sur le chemin après le module de traitement de données suivant (14),

faire du prochain module de traitement de données, le module de traitement de données suivant,

répéter l'étape consistant à déterminer s'il y a un prochain module de traitement de données sur le chemin jusqu'à ce que soit le prochain module de traitement de données soit le premier module de traitement de données (60), soit qu'il n'y ait plus de prochain module de traitement de données, déterminer qu'une boucle associée au premier module de traitement de données (12) est présente dans le cas où un des modules rencontrés sur le chemin est ledit premier module de traitement de données, et stocker des données concernant cette boucle en relation avec ledit premier module de traitement de données (12).

**13.** Dispositif informatique selon la revendication 12, dans lequel un chemin de traitement de données peut comprendre des branches et dans lequel l'unité de détermination de boucle (23) est en outre arrangée pour retirer une branche après un point de branchement (72) si une séquence de modules de traitement de données (68, 72, 70, 68) comprenant les modules de traitement de données de ladite branche (70, 68) a été préalablement suivie dans le même ordre sur le chemin.

**14.** Dispositif informatique selon l'une quelconque des revendications 11 à 13, dans lequel le message de vérification de boucle indique chaque module de traitement de données qui fait partie de la boucle.

**15.** Dispositif informatique selon l'une quelconque des revendications 11 à 13, dans lequel le premier module de traitement de données (12) est en outre arrangé pour collecter et stocker des données de boucle concernant d'autres modules de traitement de données (14, 16) se trouvant dans les boucles associées au premier module de traitement de données (12), où lesdites données de boucle comprennent des données concernant des boucles dans lesquelles se trouvent lesdits autres modules de traitement de données, et pour délivrer des messages de vérification de boucle à un prochain module de traitement de données dans toutes les boucles, sur la base de telles données de boucle stockées, où chaque module de traitement de données dans une boucle comprend des données de boucle concernant les boucles dans lesquelles se trouvent d'autres modules de traitement de données pour effectuer un tel envoi de message de vérification de boucle.

**16.** Dispositif informatique selon l'une quelconque des revendications 11 à 15, dans lequel une unité de contrôle d'état (22) est arrangée pour envoyer un message de vérification de boucle (C) dans chaque boucle.

**17.** Dispositif informatique selon l'une quelconque des revendications 11 à 15, dans lequel l'unité de contrôle d'état est arrangée pour envoyer N messages de vérification de boucle dans chaque boucle, où N dépend du nombre d'entrées vers le module de traitement de données étant connecté dans une boucle ou du nombre de sorties du module de traitement de données connecté dans lesdites boucles.

**18.** Dispositif informatique selon la revendication 17, dans lequel N est soit égal au nombre d'entrées dans le module de traitement de données étant connecté dans une boucle, soit égal au nombre de sorties du module de traitement de données connecté dans lesdites boucles plus un, selon lequel est le plus petit nombre.

**19.** Dispositif informatique selon l'une quelconque des revendications 11 à 15, dans lequel K+1 vérifications de boucle sont effectuées, où K est le nombre de liaisons dans un ensemble critique, où K est plus petit que le nombre de canaux d'entrée vers le module de traitement de données étant connecté dans une boucle et plus petit que le nombre de canaux de sortie du module de traitement de données connecté dans lesdites boucles.

**20.** Dispositif informatique selon l'une quelconque des revendications 11 à 19, dans lequel l'unité de contrôle d'état (22) est en outre arrangée pour envoyer un message d'état indiquant un nouvel état sur tous les canaux de sortie.

**21.** Système de traitement de données (10) pour garantir le traitement correct de données selon divers états de système (S0, S1) et comprenant un certain nombre de modules de traitement de données (12, 14, 16), où au moins un module de traitement de données (12) est pourvu comme dispositif informatique selon l'une quelconque des revendications 11 à 20.

**22.** Système de traitement de données (10) selon la revendication 21, où il s'agit d'un système de transactions commerciales.

**23.** Produit programme informatique pour garantir le traitement correct de données selon divers états de système (S0, S1) en fournissant une unité de contrôle d'état (22) d'un premier module de traitement de données (12) dans un système de traitement de données (10), comprenant un code de programme informatique sur un support de données arrangé pour, lorsque ledit support de données est chargé dans un ordinateur,

bloquer la réception des données sur tous les canaux d'entrée (26, 28) sur lesquels un message d'état (S), indiquant un changement d'un ancien état (S0) à un nouvel état (S1), a été reçu,

envoyer au moins un message de vérification de boucle (C) dans chaque boucle dans un ensemble de boucles de traitement de données (L), où ledit ensemble comprend toutes les boucles dans lesquelles ledit premier module de traitement de données (12) est connecté via des canaux d'entrée (30) et de sortie (32) associés, et pour lesquels canaux d'entrée associés (30) l'ancien état (S0) s'applique, et

retirer le blocage lorsque, pour chaque boucle dans l'ensemble, soit le message de vérification de boucle (C) est reçu dans le premier module de traitement de données (12), soit le canal d'entrée associé a reçu un message d'état indiquant le nouvel état et tous les autres canaux d'entrée (26, 28) du premier module de traitement de données (12) ont reçu un message d'état (S) indiquant ledit nouvel état.

FIG. 1

36

38

RECEIVE STATE MESSAGES INDICATING STATE S1

BLOCK DATA RECEPTION ON CHANNELS WITH STATE S1

40

SEND LOOP CHECK MESSAGES C INTO LOOPS ASSOCIATED WITH CHANNELS HAVING STATE S0

42

LOOP CHECK CONDITION FULFILLED ?

N

44

Y

46

REMOVE BLOCKING

SEND STATE MESSAGES INDICATING STATE S1

FIG. 2

48

```
READ SYSTEM CONFIGURATION
DATA OF FIRST MODULE
```

50

```
DETERMINE OUTPUT CHANNELS TO OTHER MODULES
```

52

```
FOR EACH PATH DO
```

54

```
READ SYSTEM CONFIGURATION
DATA OF FOLLOWING MODULE
```

56

PATH ENDED ? — Y → 58 NO LOOP

N

60

FOLLOWING MODULE = FIRST MODULE? — Y → 64 LOOP → 66 STORE LOOP DATA

N

62

```
NEXT MODULE = FOLLOWING MODULE
```

FIG. 3

FIG. 4

FIG. 5

| 70 | | 68 |

| 68 | | 72 |

| 74 | | 68 |

FIG. 6

| 72 |

| 70 |

| 74 | | 76 |

| 68 |

S = S1

S = S1

| 18 |

FIG. 8

FIG. 7